# NEW EUROPEAN PATENT SPECIFICATION

(11) **EP 0 797 915 B2**
(45) Date of publication and mention of the opposition decision: **31.08.2005**
(45) Mention of the grant of the patent: 18.07.2001
(21) Application number: 97200908.8
(22) Date of filing: 26.03.1997
(51) Int. Cl.: A01J 9/00, A01J 9/04, A01J 5/04, A01J 5/017

(54) **An implement for milking animals**
Vorrichtung zum Melken von Tieren
Appareil pour la traite d'animaux

(30) Priority: 29.03.1996 EP 96200870
(43) Date of publication of application: 01.10.1997
(73) Proprietor: MAASLAND N.V., 3155 PD Maasland (NL)
(72) Inventor: van den Berg, Karel, 2971 BR Bleskensgraaf (NL)
(74) Representative: Corten, Maurice Jean F.M.

(56) References cited:
- EP-A- 0 399 604
- EP-A- 0 564 023
- EP-A- 0 628 244
- EP-A- 0 679 331
- FR-A- 2 127 330
- GB-A- 1 561 821
- US-A- 4 295 490
- US-A- 4 432 700
- International Standard FIL-IDF 56A:1974
- Maskinrovingar Meddelande 2534 - pages 22, 26 and 27 of the article "Nordiska Riktlinjer för Mjölkninsanläggnigar"
- Dairy Herd Management - August 1988 - pages 30-34 "Efficiency? Try Robots"

## Description

The present invention relates to an implement for milking animals, such as cows, as defined by the preamble of claim 1 or claim 2.

Such an implement is known from US-PS-4432 700 as well as from FR-A-2 127 330.

It is an object of the invention to provide an alternative implement for milking animals.

This object is according to the invention achieved by the feactures of claim 1. It is thus possible to establish the quantity of milk per udder quarter or to submit the milk obtained from the separate udder quarters to control operations. The vacuum line preferably comprises a valve, by means of which, whilst closing off the vacuum line between the two milk receiver elements, a gaseous medium, such as air or nitrogen, can be admitted to the second milk receiver element for the purpose of having the milk present therein discharged to the milk tank. When the second milk receiver element is located above the milk tank, the gaseous medium can be constituted by the open air; however, admitting a gaseous medium under a pressure lower than the pressure of the open air to the second milk receiver element may be sufficient as well. On the other hand, when the milk tank is disposed entirely or partially above the second milk receiver element, the gaseous medium will be admitted to the second milk receiver element under a pressure higher than that of the open air.

According to the invention this object is also achieved by the features of claim 2. Thus, when several implements for milking animals are used, it will not be necessary to produce all the components of these implements in a plurality.

From the second milk receiver element the milk is guided to the milk tank and cooled therein, usually from a temperature of approximately 37° to approximately 4°. For such a milk cooling it may be favourable when the milk is pre-cooled priorto being introduced into the milk tank. Hence, the second milk receiver element can be designed as a pre-cooler for the cooling of milk and such liquids.

When the milk tank is emptied and subsequently cleaned, which operations easily take approximately one hour every two or three days, it will not be possible to supply milk during that time; then the milking of the animals will stagnate, in particular when the implement for milking animals is designed as an automatic milking implement which also comprises a milking robot for automatically connecting the teat cups to the teats of the animals to be milked and, after automatically milking same, automatically disconnecting the teat cups from the teats. In such a fully automatic milking implement the animals usually go to the milk box at random of their own free will for being milked there. Forthat reason, the milking implement will in principle be permanently operative. The time required for emptying the milk tank and cleaning same renders this permanent use impossible. Hence, an auxiliary tank can be included in the connection between the second milk receiver element and the milk tank. When the implement comprises means for cleaning the milk tank, it will be possible to collect the milk in the auxiliary tank during cleaning of the milk tank. Between the auxiliary tank and the milk tank there can be provided a valve, by means of which the milk present in the auxiliary tank can be discharged to the milk tank after the latter has been cleaned.

The auxiliary tank is preferably included in a parallel connection between the collecting element and the milk tank. The connection between the collecting element and the milk tank will preferably be provided with a valve, by means of which the milk is discharged, either directly or via the auxiliary tank, to the milk tank. In other words, only during the time when the milk tank is emptied and cleaned, the milk will be collected in the auxiliary tank. Once the milk tank has been cleaned and milk can be admitted thereto, the milk will be guided from the auxiliary tank to the milk tank and the auxiliary tank is subsequently dosed off, so that the milk yielded thereafter can flow directly into the milk tank. In a particular embodiment, the auxiliary tank comprises an expanding space whose volume increases when during the supply of milk the valve between the auxiliary tank and the milk tank is closed and whose volume subsequently decreases when said valve is opened. In such a situation it is not necessary to provide a parallel connection between the collecting element and the milk tank, in which parallel connection such an auxiliary tank would be included.

It is noticed that each of the above-mentioned valves is preferably computer-controlled. Of course, the process computer, which is already available when a fully automated milking implement is applied, will be used for the purpose.

It has already been noticed that the milk in the milk tank has to be cooled. When the milk tank is still completely empty and the cooling system of the milk tank is already switched on, then, when the first milk flows into the milk tank, icing up will occur on the wall of the milk tank. Hence, prior to switching on the cooling system, first a minimum quantity of milk has to be introduced into the milk tank or a minimum period of time has to have elapsed after supplying milk to the empty milk tank, whereafter, during a fixed period of time, cooling will be effected in a pulsating manner and, after the latter period of time has passed, will be effected continuously.

For a better understanding of the invention, reference will now be made to the accompanying drawings, in which
Figure 1 shows schematically that part of the implement for milking animals in accordance with the preamble of claims 1 and 2 which is relevant for illustrating the prior art;
Figure 2 shows a similar part of the implement, in an arrangement in which the milk tank is located above the second milk receiver element;
Figure 3 shows a similar part of the implement, in a situation in which there are provided two milking systems;
Figure 4 shows a part of an embodiment, in which for each udder quarter there is provided a separate first milk receiver element;
Figure 5 shows the position of the auxiliary tank in the implement in accordance with the invention;
Figure 6 shows an other way in which the auxiliary tank can be included in the implement, while
Figure 7 shows again an other way in which the auxiliary tank, now provided with an expanding space, can be included in the implement.

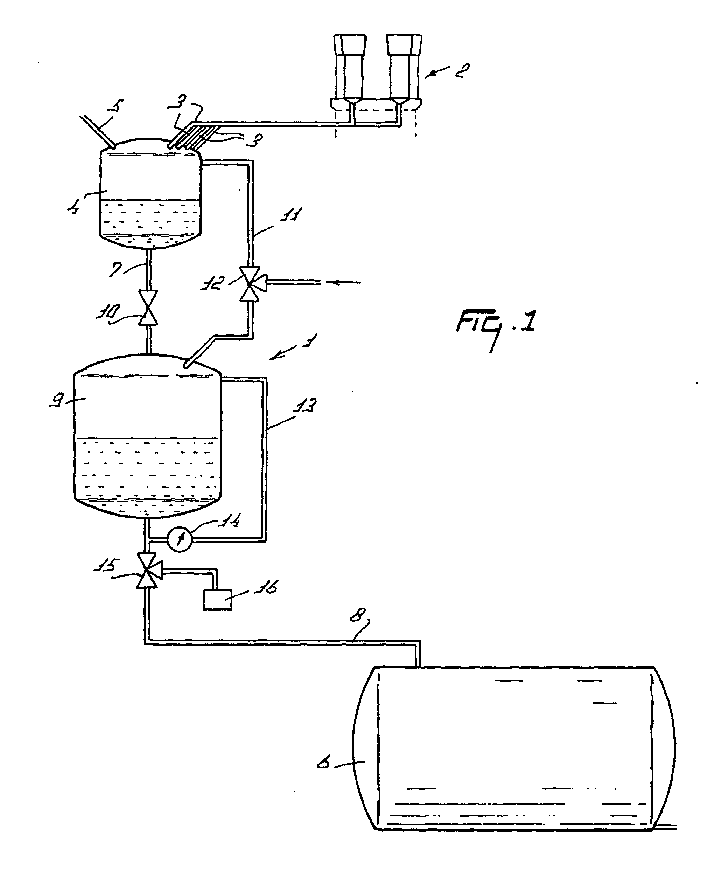

Figure 1 shows a milking installation 1 for an implement for milking animals, such as cows, whereby for the sake of simplicity said milking Installation is only represented insofar as desirable for illustrating the prior art. The milking installation comprises teat cups 2 capable of being connected to the teats of an animal to be milked, which teat cups are all connected via milk lines 3 with a first milk receiver element 4. To this first milk receiver element 4 there is further connected a vacuum line 5 which is connected with a (non-shown) vacuum pump. Via this vacuum line a vacuum in the milk lines 3 is created and air, sucked together with the milk from the teat cups, is discharged. If desired, the milk receiver element 4 can be designed as a milk meter or a milk glass including a quantity meter, so that the quantity of milk obtained from a specific animal can be established therein. From the first milk receiver element 4 the milk yielded is guided via a connection, constituted by the milk lines 7 and 8, to a milk tank 6. In the connection between the first milk receiver element 4 and the milk tank 6 there is included a second milk receiver element 9. In the milk line 7 between the two milk receiver elements 4 and 9 there is included a valve 10 for the purpose of having the milk collected in the first milk receiver element 4, obtained from an animal which is being milked, flow into the second milk receiver element 9 after a fixed period of time has passed. This fixed period of time can be adjusted such that only after the animal to be milked has been milked out and all the milk obtained from this animal has been collected in the first milk receiver element 4, this milk can flow to the second milk receiver element 9. When in that case the first milk receiver element is designed as a milk meter or a milk glass including a quantity meter, it will be possible to determine this quantity of milk therein, although this will also be possible in the second milk receiver element when the latter is designed as a milk meter or a milk glass including a quantity meter. Said fixed period of time may also be attuned to the signal supplied by a sensor which detects that the milk flow of the animal being milked has stopped. Said fixed period of time can also be shorter than the time required for milking an animal out. In that case milk can flow from the first milk receiver element 4 to the second receiver element 9, in spite of the fact that the animal whose milk has been collected in the first milk receiver element has not yet been milked out. This situation may occur when from the milk present in the second milk receiver element 9 only a milk sample has to be taken. Once this sample having been taken, the milk present in the second milk receiver element 9 can be discharged to the milk tank 6 and, as soon as the second milk receiver element 9 is empty, milk can flow from the first milk receiver element to the second one. Instead of waiting till a milk sample has been taken, it is also possible to wait till specific control operations regarding milk present in the second milk receiver element 9 have been performed. These control operations can relate to establishing e.g. the fat content, the protein content or the lactose content of the milk and can be effected for the milk present in the second milk receiver element as well as for a milk sample taken. Establishing the fat content, the protein content or the lactose content can be effected with the aid of first measuring means, such as spectrometric means or other sensors suitable for the purpose.

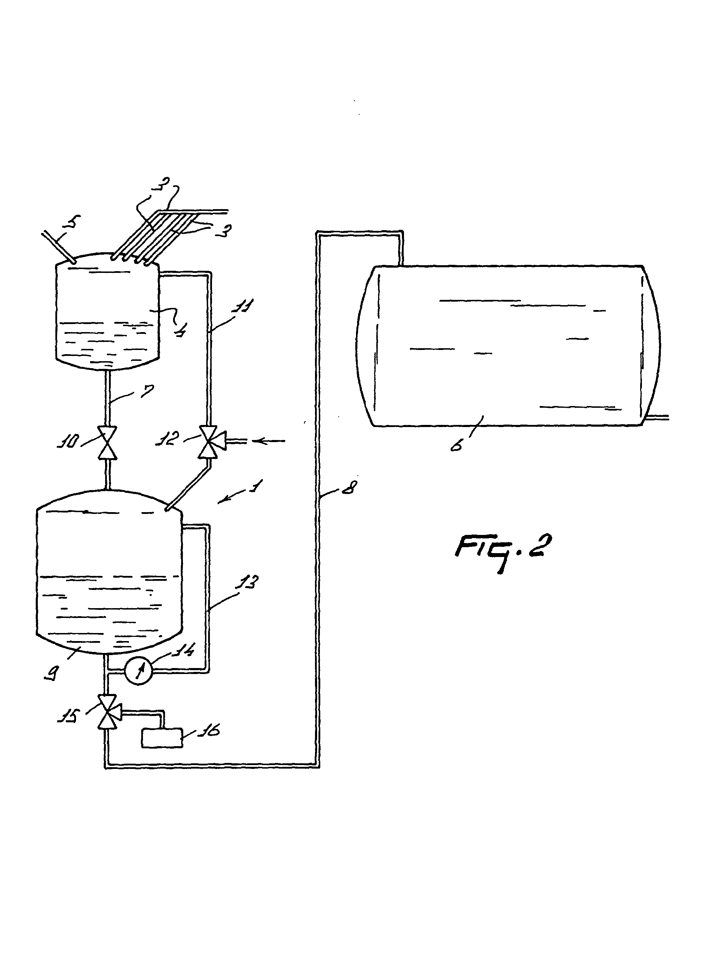

Between the milk receiver elements 4 and 9 there is further provided a vacuum line 11 for enabling milk to flow from the first milk receiver element to the second one. In said vacuum line 11 there is included a valve 12. By means of this valve 12 the vacuum line between the two milk receiver elements can be closed off. This facility is important in view of removing the milk from the second milk receiver element 9. When, as shown in Figure 2, the second milk receiver element 9 is located above the milk tank 6, said second milk receiver element 9 will be emptied when it will be connected by means of the valve 12 with the open air. However, in that case it will be sufficient to admit, by means of the valve 12, a gaseous medium, such as air or nitrogen, under a pressure lower than that of the open air, to the second milk receiver element. Admitting a gaseous medium under a lower pressure than that of the open air has advantages, because, of course, this gaseous medium has to be sucked away upon re-establishing the vacuum line between the two milk receiver elements. When the milk tank is located entirely or partially above the second milk receiver element, as shown in Figure 2, for the purpose of guiding the milk from the second milk receiver element 9 to the milk tank 6, the vacuum line between the two milk receiver elements has to be broken and a gaseous medium under a higher pressure than that of the open air, e.g. compressed air, has to be supplied to the second milk receiver element 9. This renders the presence of a pump in the milk line 8 between the second milk receiver element 9 and the milk tank 6 superfluous.

In Figures 1 and 2, there is provided across the second milk receiver element 9 a circulation line 13, in which a pressure meter 14 is included for determining the quantity of milk present in the second milk receiver element 9 by measuring the difference in pressure over the milk present in the second milk receiver element 9. Therefore, in these embodiments, the second milk receiver element 9 is designed as a milk glass including a quantity meter.

In the milk line 8 there is provided a valve 15 almost immediately beyond the exit opening of the second milk receiver element 9. By means of this valve 15 the milk can flow or be pressed from the second milk receiver element 9 to the milk tank 6. However, the milk line 8 can be closed off for the purpose of taking a sample from the milk present in the second milk receiver element. To that end there is also provided on the valve 15 an element 16 for taking a milk sample, which element 16 is capable of being included in first measuring means, such as a spectrometer or similar measuring instrument, in order to determine e.g. the fat content, the protein content or the lactose content of the milk. These values can be supplied to a (non-shown) computer, in which, on the basis thereof, there can be determined an average value for the content of these elements of the milk, at least on average over the animals milked, while furthermore there can be established whether the milk of specific animals has a fat content, a protein content or a lactose content deviating to a considerable extent from the aforementioned average value for these quantities.

As already mentioned, apart from the embodiments shown in Figures 1 and 2, the first milk receiver element 4, can be designed as a milk meter or a milk glass including a quantity meter; in that case in particular the second milk receiver element 9 can be designed as a pre-cooler.

The milk, whether pre-cooled or not, is eventually supplied to the milk tank 6, in which the milk stored is cooled till approximately 4½. When the milk tank 6 is emptied and cleaned, so that milk can again be admitted thereto, it is desirable not to switch on immediately the cooling of the milk tank 6 in order to avoid icing up on the inner wall of the milk tank. First a minimum quantity of milk has to be present in the milk tank 6 or a minimum number of cows has to be milked after emptying the milk tank 6 before the cooling of the milk tank is switched on. In a next stage, prior to switching on the cooling at full power, the cooling first has to be operative in a pulsating manner. Of course, in this stage, the time required for cooling each time in a pulsating manner and the total time required for cooling will depend to a considerable extent on the cooling capacity of the cooler in the milk tank and may also depend on the quantity of milk which has been cooled and which is still to be cooled.

It is also possible to take a sample from the milk present in the milk tank and to determine spectrometrically with the aid of second measuring means, inside or outside the milk tank, the fat content, the protein content or the lactose content. The values established therefor will then in principle have to correspond to the average values calculated therefor in the computer, established on the basis of the values determined for the milk of the individual animals, such as established e.g. by means of the element 16 for taking a milk sample, which element 16 is included in a spectrometric instrument. The second measuring means can be used, if desired, for the calibration of the first measuring means.

The great advantage of the milking installation described here is that, during taking a sample or during performing control operations with regard to the milk obtained from a specific animal, a next animal does not need to wait but can always be milked; the milk of this animal will be temporarily collected in the first milk receiver element 4.

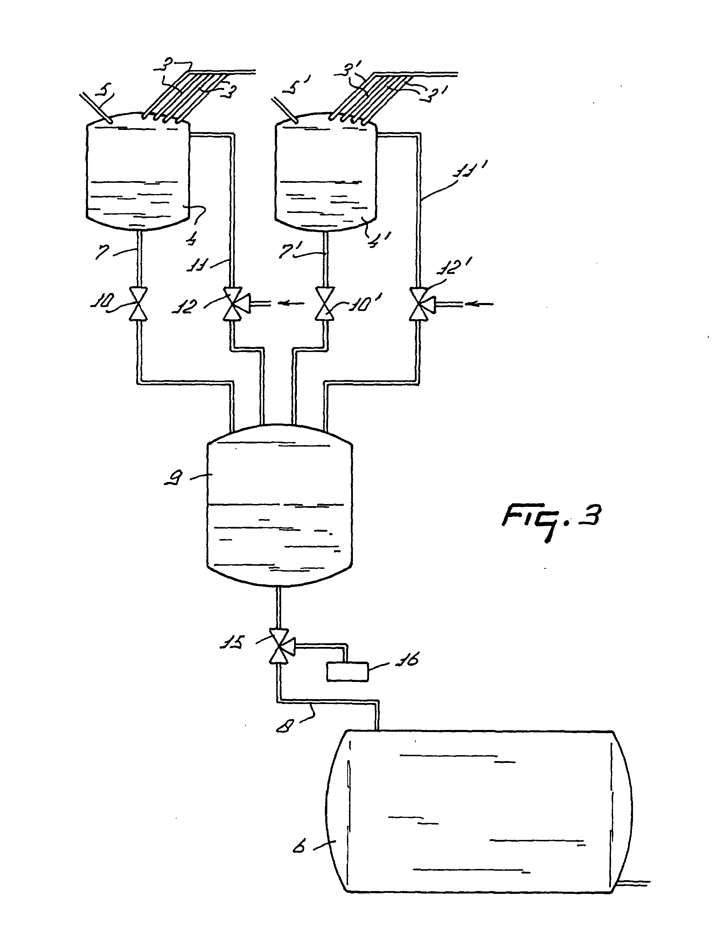

Figure 3 shows a modified arrangement of the milking installation. This milking installation is suitable for a duo-milking implement, in which two animals can be milked simultaneously, the milk of these animals can be collected separately in a separate first milk receiver element 4 and 4', whereafter this milk can be guided in a controlled manner, i.e. under control of a computer, e. g. alternately from the milk receiver elements 4 and 4' to the second milk receiver element.

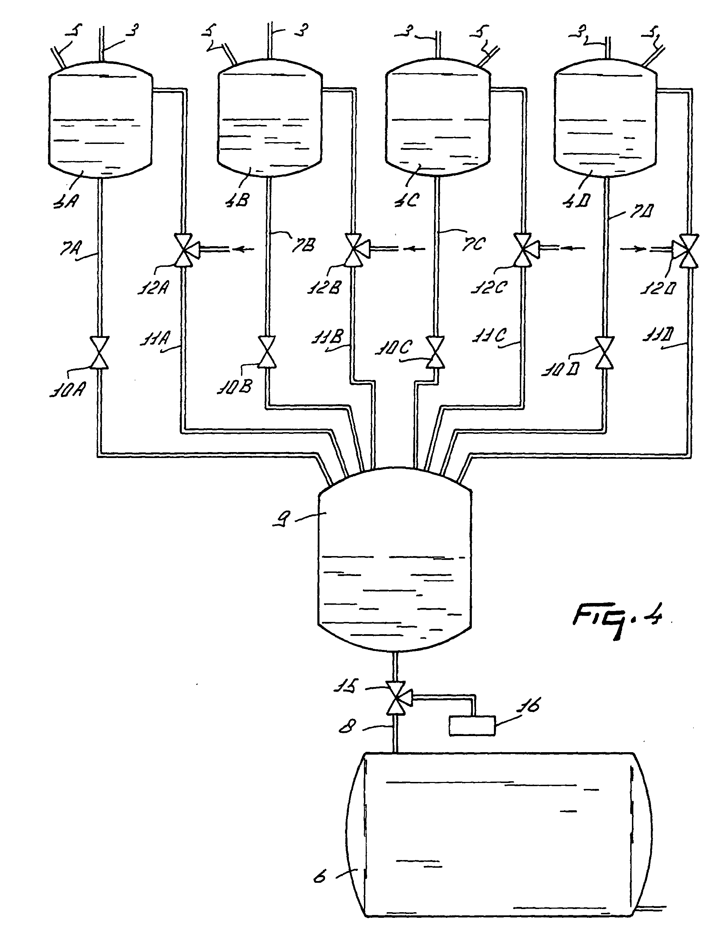

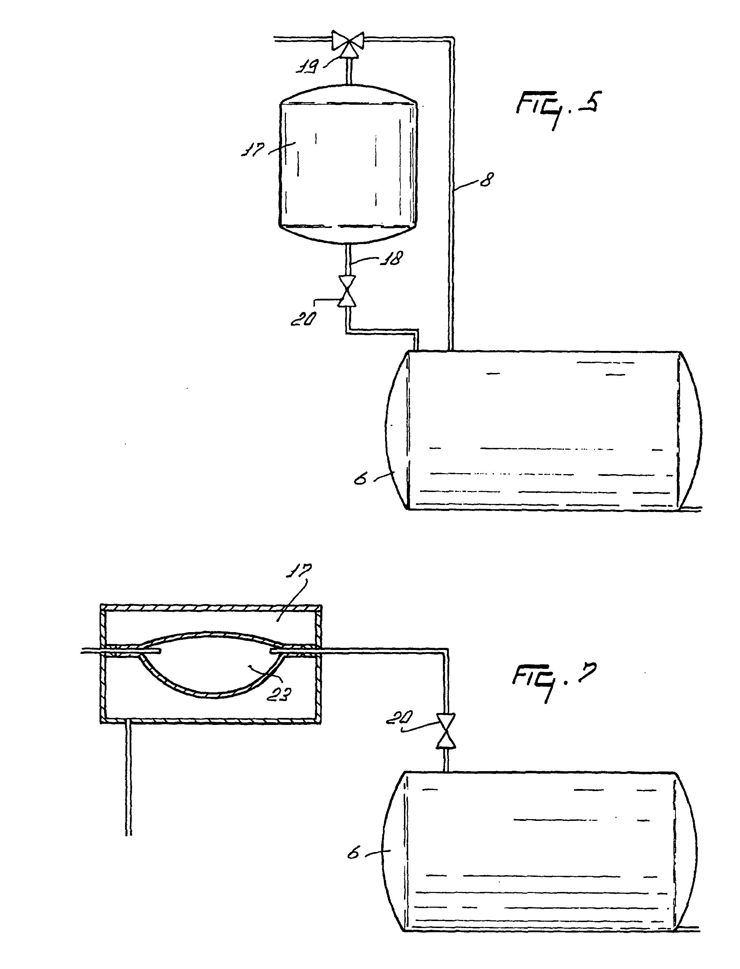

Figure 4 shows again an other arrangement of the milking installation. In this situation each teat cup is connected to an individual first milk receiver element 4A, 4B, 4C and 4D respectively, so that the quantity of milk obtained from the separate udder quarters can be determined individually if at least the first milk receiver elements are designed as a milk glass including a quantity meter, whereafter the milk can be guided in a controlled manner to the second milk receiver element.

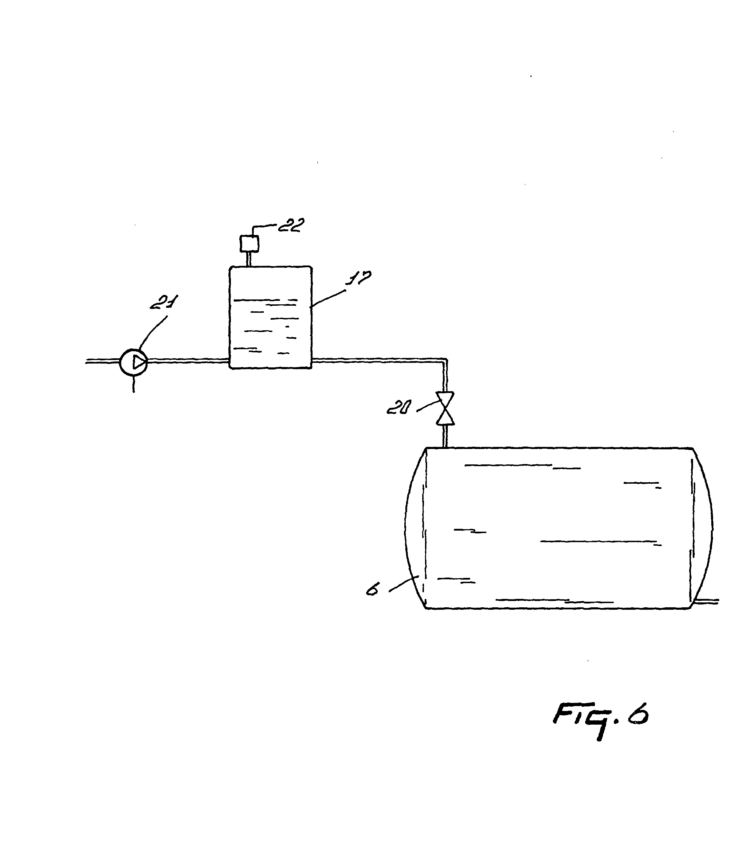

The implement for milking animals including the above-described milking installation can in particular be applied in a fully automated milking system. The implement then comprises a milking robot for automatically connecting teat cups to the teats of an animal to be milked and, after automatically milking the animal, for automatically disconnecting the teat cups from the teats. In such a milking system the animals go to the milking implement of their own free will for being milked there. Due to this, it may happen that, also during the time when the milk tank 6 is emptied and cleaned, animals present themselves for being milked. Emptying and cleaning of the milk tank 6 is effected approximately every two or three days and takes approximately one hour. Without taking measures, it would not be possible to milk animals during that time. In order to avoid this, in the connection between a collecting element for the milk obtained via the teat cups and the milk tank 6, there can be included an auxiliary tank 17. In the embodiment shown in Figure 5, the auxiliary tank 17 is included in a parallel connection constituted by a milk line 18 between a collecting element for the milk and the milk tank 6. In the milk line 8 there is included a valve 19, by means of which the milk supplied via the line 8 is discharged, either directly or via the auxiliary tank 17, to the milk tank 6. In the milk line 18, between the auxiliary tank 17 and the milk tank 6, there is further provided a valve 20, by means of which the milk present in the auxiliary tank 17 can be discharged to the milk tank 6 after the latter has been cleaned. The arrangement shown in Figure 5 can be applied in combination with an arrangement as described and represented in any one of Figures 1 to 4. In that case the discharge line of the second milk receiver element 9 is connected with the entrance connection of the valve 19. However, it will also be possible to use the arrangement shown in Figure 5 in a milking installation of a type which is completely differentfrom those shown in any one of Figures 1 to 4. For example, it is possible that one milk receiver element or both milk receiver elements is/are absent and that instead there is provided a milk claw to which the milk lines coming from the teat cups are connected. If required, the exit of the milk claw can then be connected directly to the entrance of the valve 19. Alternative embodiments for the arrangement shown in Figure 5 are represented in Figures 6 and 7. In Figure 6, in the milk line between a collecting element, either constituted by one of the two milk receiver elements or a milk claw, and the milk tank, there is included an auxiliary tank 17 preceded by a pump 21. Between the auxiliary tank 17 and the milk tank 6 there is provided a valve 20. When the valve 20 is closed, i.e. during emptying and cleaning of the milk tank 6, the milk supplied is pumped into the auxiliary tank 17 by means of the pump 21. When the valve 20 releases the connection between the auxiliary tank 17 and the milk tank 6, the milk flows automatically from the auxiliary tank 17 into the milk tank 6. The auxiliary tank 17 is provided with an overpressure valve 22. Figure 7 shows an embodiment in which the auxiliary tank 17 comprises an expanding space 23 whose volume increases when during the supply of milk the valve 20 between the auxiliary tank 17 and the milk tank 6 is closed and whose volume subsequently decreases when said valve 20 is opened. The expanding space can be made of a flexible material so that, when milk is introduced into the auxiliary tank and cannot flow to the milk tank 6, the space 23 is automatically increased. This process can be facilitated by applying an underpressure in the space between the outer wall of the auxiliary tank 17 and the expanding space 23 as soon as the valve 20 is closed. When thereafter the valve 20 is opened, the underpressure can be removed so that the volume of the expanding space can resume its initial value due to the surrounding pressure or, when required, because of an increased pressure by means of compressed air.

The entire system and in particular the valves mentioned here, as well as the first and second measuring means for the determination of the content of various elements of the milk, such as the fat content, the protein content or the lactose content, are under control of a computer. This is preferably the same computer as the one controlling the automatic milking process and the milking robot.

The invention is not restricted to the embodiments shown, but also relates to all kinds of alternatives, of course, falling within the scope of the following claims.

## Claims

1. An implement for milking animals, such as cows, said implement comprising teat cups (2) capable of being connected to the teats of an animal to be milked, whereby a teat cup (2) is connected with a first milk receiver element (4), from which the milk yielded is guided to a milk tank (6), said implement comprising at least one further milk receiver element (9) located between the first milk receiver element (4) and the milk tank (6), while there is a parallel connection between the two milk receiver elements (4, 9), and that one of the connections is constituted by a vacuum line (11), **characterized in that** there are provided four teat cups (2) each of which being connected with a separate first milk receiver element (4A, 4B, 4C, 4D), while each of these first milk receiver elements is connected to the same second milk receiver element (9) by a respective parallel connection.

2. An implement for milking animals, such as cows, said implement comprising groups of teat cups (2), each capable of being connected to the teats of an animal to be milked, whereby a teat cup (2) is connected with a first milk receiver element (4), from which the milk yielded is guided to a milk tank (6), said implement comprising at least one further milk receiver element (9) located between the first milk receiver element (4) and the milk tank (6), while there is a parallel connection between the two milk receiver elements (4, 9), and that one of the connections is constituted by a vacuum line (11), **characterized in that** there are provided several first milk receiver elements (4, 4') each of which being connected to the same second milk receiver element (9) by a respective parallel connection, while the number of groups of teat cups equals the number of first milk receiver elements (4, 4'), and each group of teat cups is connected with a separate first milk receiver element (4, 4').

3. An implement as claimed in claim 1, **characterized in that** the implement comprises a valve (10) located in the milk line (7) between the two milk receiver elements (4, 9) for the purpose of having the milk collected in the first milk receiver element (4), obtained from an animal which is being milked, flow into the second milk receiver element (9) after a fixed period of time has passed.

4. An implement as claimed in claim 3, **characterized in that** the valve (10) may release milk from the milk line (7) after there has been taken a milk sample from the milk in the second milk receiver element (9).

5. An implement as claimed in claim 1, 2, 3 or 4 **characterized in that** the vacuum line (11) comprises a valve (12), by means of which, whilst closing off the vacuum line (11) between the two milk receiver elements (4, 9), a gaseous medium, such as air or nitrogen, can be admitted to the second milk receiver element (9) for the purpose of having the milk present therein discharged to the milk tank (6).

6. An implement as claimed in any one of the preceding claims, **characterized in that** the second milk receiver element (9) is located above the milk tank (6).

7. An implement as claimed in any one of the preceding claims, **characterized in that** the second milk receiver element (9) is located above the milk tank (6), and the gaseous medium can be admitted to the second milk receiver element (9) under a pressure lower than the pressure of the open air

8. An implement as claimed in any one of the preceding claims, **characterized in that** the milk tank (6) is disposed entirely or partially above the second milk receiver element (9), and the gaseous medium can be admitted to the second milk receiver element (9) under a pressure higher than that of the open air.

9. An implement as claimed in any one of the preceding claims, **characterized in that** the second milk receiver element (9) is designed as a pre-cooler for the cooling of milk and such liquids.

10. An implement as claimed in any one of the preceding claims; **characterized in that** there is included an auxiliary tank (17) in the connection between the second milk receiver element (9) and the milk tank (6).

11. An implement as claimed in claim 10, **characterized in that** the implement comprises means for cleaning the milk tank (6), whereby during cleaning of the milk tank (6) the milk is collected in the auxiliary tank (17).

12. An implement as claimed in claim 11, **characterized in that** between the auxiliary tank (17) and the milk tank (6) there is provided a valve (20), by means of which the milk present in the auxiliary tank (17) can be discharged to the milk tank (6) after the latter has been cleaned.

13. An implement as claimed in claim 12, **characterized in that** the auxiliary tank (17) is included in a parallel connection (18) between the collecting element and the milk tank (6).

14. An implement as claimed in claim 13, **characterized in that** in the connection between the collecting element and the milk tank (6) there is included a valve (19), by means of which the milk is discharged, elther directly or via the auxiliary tank (17), to the milk tank (6).

15. An implement as claimed in claim 12, **characterized in that** the auxiliary tank (17) comprises an expanding space (23) whose volume increases when during the supply of milk the valve (20) between the auxiliary tank (17) and the milk tank (6) is closed and whose volume subsequently decreases when said valve (20) is opened.

16. An implement as claimed in any one of the preceding claims, **characterized in that** the valves (10, 10', 10A, 10B, 10C, 10D, 12, 15, 19 and 20) are computer-controlled.

17. An implement as claimed in any one of the preceding claims, **characterized in that** the milk tank (6) comprises a cooling-system, whereby, after a minimum quantity of milk has been introduced into the milk tank (6) or a minimum period of time has elapsed after supplying milk to the empty milk tank (6), cooling is effected in a pulsating manner during a fixed period of time, and, after the latter period of time has passed, is effected continuously.

18. An implement as claimed in any one of the preceding claims, **characterized in that** there are provided first measuring means for determining the content of specific elements of the milk obtained from the individual animals, such as the fat content, the protein content or the lactose content.

19. An implement as claimed in claim 18, **characterized in that** there is provided a computer for calculating, on the basis of the content of specific elements established for the milk of the individual animals, an average value therefor for a number of animals.

20. An implement as claimed in claim 19, **characterized in that** the computer records when the content of specific elements of the milk of the individual animals deviates to a specific extent from the average value calculated therefor.

21. An implement as claimed in claim 19 or 20, **characterized in that** there are provided second measuring means for determining the content of specific elements of the milk obtained from all the animals milked together, such as the fat content, the protein content or the lactose content.

22. An implement as claimed in claim 21, **characterized in that** the computer records when the content of specific elements of the milk, established for all the animals milked together, deviates to a specific extent from the average value calculated therefor.

23. An implement as claimed in claim 21 or 22, **characterized in that** the second measuring means can be used for the calibration of the first measuring means.

## Patentansprüche

1. Vorrichtung zum Melken von Tieren, wie z. B. Kühen, wobei die Vorrichtung an die Zitzen eines zu melkenden Tieres anschließbare Zitzenbecher (2) aufweist, wobei ein Zitzenbecher (2) mit einem ersten Milchaufnahmeelement (4) verbunden ist, von dem die gewonnene Milch zu einem Milchtank (6) geleitet wird, wobei die Vorrichtung mindestens ein weiteres Milchaufnahmeelement (9) aufweist, das zwischen dem ersten Milchaufnahmeelement (4) und dem Milchtank (6) angeordnet ist, wobei eine parallele Leitung zwischen den beiden Milchaufnahmeelementen (4, 9) angeordnet ist und eine der Leitungen durch eine Vakuumleitung (11) gebildet ist,
**dadurch gekennzeichnet, daß** vier Zitzenbecher (2) vorgesehen sind, von denen jeder mit einem separaten ersten Milchaufnahmeelement (4A, 4B, 4C, 4D) verbunden ist, wobei jedes dieser ersten Milchaufnahmeelemente durch eine entsprechende parallele Leitung mit demselben zweiten Milchaufnahmeelement (9) verbunden ist.

2. Vorrichtung zum Melken von Tieren, wie z. B. Kühen, wobei die Vorrichtung Gruppen von Zitzenbechern (2) aufweist, die jeweils an die Zitzen eines zu melkenden Tieres anschließbar sind, wobei ein Zitzenbecher (2) mit einem ersten Milchaufnahmeelement (4) verbunden ist, von dem die gewonnene Milch zu einem Milchtank (6) geleitet wird, wobei die Vorrichtung mindestens ein weiteres Milchaufnahmeelement (9) aufweist, das zwischen dem ersten Milchaufnahmeelement (4) und dem Milchtank (6) angeordnet ist, wobei eine parallele Leitung zwischen den beiden Milchaufnahmeelementen (4, 9) angeordnet ist und eine der Leitungen durch eine Vakuumleitung (11) gebildet ist,
**dadurch gekennzeichnet, daß** mehrere erste Milchaufnahmeelemente (4, 4') vorgesehen sind, von denen jedes durch eine entsprechende parallele Leitung mit demselben zweiten Milchaufnahmeelement (9) verbunden ist, wobei die Anzahl von Gruppen von Zitzenbechern gleich der Anzahl von ersten Milchaufnahmeelementen (4, 4') ist und jede Gruppe von Zitzenbechern mit einem separaten ersten Milchaufnahmeelement (4, 4') verbunden ist.

3. Vorrichtung nach Anspruch 1 oder 2,
**dadurch gekennzeichnet, daß** die Vorrichtung ein Ventil (10) aufweist, das in der Milchleitung (7) zwischen den beiden Milchaufnahmeelementen (4, 9) angeordnet ist und dazu dient, die von dem ersten Milchaufnahmeelement (4) aufgenommene Milch, die von einem Tier während des Melkens gewonnen wurde, nach Ablauf eines festgelegten Zeitraumes in das zweite Milchaufnahmeelement (9) fließen zu lassen.

4. Vorrichtung nach Anspruch 3,
**dadurch gekennzeichnet, daß** von dem Ventil (10) Milch aus der Milchleitung (7) freizugeben ist, nachdem eine Milchprobe von der in dem zweiten Milchaufnahmeelement (9) befindlichen Milch entnommen worden ist.

5. Vorrichtung nach Anspruch 1, 2, 3 oder 4,
**dadurch gekennzeichnet, daß** in der Vakuumleitung (11) ein Ventil (12) angeordnet ist, mittels dessen nach Schließen der Vakuumleitung (11) zwischen den beiden Milchaufnahmeelementen (4, 9) ein gasförmiges Medium, wie z. B. Luft oder Stickstoff, in das zweite Milchaufnahmeelement (9) einzuleiten ist, damit die darin befindliche Milch in den Milchtank (6) abgeleitet wird.

6. Vorrichtung nach einem der vorhergehenden Ansprüche,
**dadurch gekennzeichnet, daß** das zweite Milchaufnahmeelement (9) über dem Milchtank (6) angeordnet ist.

7. Vorrichtung nach einem der vorhergehenden Ansprüche,
**dadurch gekennzeichnet, daß** das zweite Milchaufnahmeelement (9) über dem Milchtank (6) angeordnet ist, und daß das gasförmige Medium unter einem niedrigeren Druck als dem Luftdruck in das zweite Milchaufnahmeelement (9) einzuleiten ist.

8. Vorrichtung nach einem der vorhergehenden Ansprüche,
**dadurch gekennzeichnet, daß** der Milchtank (6) ganz oder teilweise über dem zweiten Milchaufnahmeelement (9) angeordnet ist, und daß das gasförmige Medium unter einem höheren Druck als dem Luftdruck in das zweite Milchaufnahmeelement (9) einzuleiten ist.

9. Vorrichtung nach einem der vorhergehenden Ansprüche,
**dadurch gekennzeichnet, daß** das zweite Milchaufnahmeelement (9) als Vorkühlvorrichtung zum Kühlen von Milch und ähnlichen Flüssigkeiten ausgeführt ist.

10. Vorrichtung nach einem der vorhergehenden Ansprüche,
**dadurch gekennzeichnet, daß** in der Leitung zwischen dem zweiten Milchaufnahmeelement (9) und dem Milchtank (6) ein Hilfstank (17) angeordnet ist.

11. Vorrichtung nach Anspruch 10,
**dadurch gekennzeichnet, daß** die Vorrichtung eine Vorrichtung zur Reinigung des Milchtanks (6) umfaßt, wobei die Milch während der Reinigung des Milchtanks (6) vom Hilfstank (17) aufgenommen wird.

12. Vorrichtung nach Anspruch 11,
**dadurch gekennzeichnet, daß** zwischen dem Hilfstank (17) und dem Milchtank (6) ein Ventil (20) angeordnet ist, mittels dessen die in dem Hilfstank (17) befindliche Milch in den Milchtank (6) zu leiten ist, nachdem dieser gereinigt worden ist.

13. Vorrichtung nach Anspruch 12,
**dadurch gekennzeichnet, daß** der Hilfstank (17) in einer parallelen Leitung (18) zwischen dem Aufnahmeelement und dem Milchtank (6) angeordnet ist.

14. Vorrichtung nach Anspruch 13,
**dadurch gekennzeichnet, daß** in der Leitung zwischen dem Aufnahmeelement und dem Milchtank (6) ein Ventil (19) angeordnet ist, mittels dessen die Milch entweder direkt oder über den Hilfstank (17) in den Milchtank (6) geleitet wird.

15. Vorrichtung nach Anspruch 12,
**dadurch gekennzeichnet, daß** der Hilfstank (17) eine Expansionskammer (23) aufweist, deren Volumen zunimmt, wenn das Ventil (20) zwischen dem Hilfstank (17) und dem Milchtank (6) während der Zufuhr von Milch geschlossen wird, und deren Volumen danach abnimmt, wenn das Ventil (20) geöffnet wird.

16. Vorrichtung nach einem der vorhergehenden Ansprüche,
**dadurch gekennzeichnet, daß** die Ventile (10, 10', 10A, 10B, 10C, 10D, 12, 15, 19 und 20) rechnergesteuert sind.

17. Vorrichtung nach einem der vorhergehenden Ansprüche,
**dadurch gekennzeichnet, daß** der Milchtank (6) ein Kühlsystem aufweist, wobei nach Einleiten einer Mindestmilchmenge in den Milchtank (6) oder nach Verstreichen eines Mindestzeitraumes seit der Einleitung von Milch in den leeren Milchtank (6) die Kühlung während eines festgelegten Zeitraumes pulsierend und nach Ablauf dieses Zeitraumes kontinuierlich erfolgt.

18. Vorrichtung nach einem der vorhergehenden Ansprüche,
**dadurch gekennzeichnet, daß** erste Meßvorrichtungen vorgesehen sind, um den Gehalt der von den einzelnen Tieren gewonnenen Milch an bestimmten Bestandteilen, wie z. B. den Gehalt an Fett, Protein oder Laktose, zu ermitteln.

19. Vorrichtung nach Anspruch 18,
**dadurch gekennzeichnet, daß** ein Computer vorgesehen ist, um auf der Basis des Gehaltes an bestimmten Bestandteilen, der für die Milch der einzelnen Tieren ermittelt worden ist, einen Durchschnittswert für eine Anzahl von Tieren zu errechnen.

20. Vorrichtung nach Anspruch 19,
**dadurch gekennzeichnet, daß** von dem Computer aufgezeichnet wird, wenn der Gehalt an bestimmten Bestandteilen der Milch von den einzelnen Tieren um ein bestimmtes Maß von dem hierfür errechneten Durchschnittswert abweicht.

21. Vorrichtung nach Anspruch 19 oder 20,
**dadurch gekennzeichnet, daß** eine zweite Meßvorrichtung vorgesehen ist, um den Gehalt der von der Gesamtheit der gemolkenen Tiere gewonnenen Milch an bestimmten Bestandteilen, wie z. B. den Gehalt an Fett, Protein oder Laktose, zu ermitteln.

22. Vorrichtung nach Anspruch 21,
**dadurch gekennzeichnet, daß** von dem Computer aufgezeichnet wird, wenn der Gehalt an bestimmten Bestandteilen der Milch, der für die Gesamtheit der gemolkenen Tiere ermittelt wurde, um ein bestimmtes Maß von dem hierfür errechneten Durchschnittswert abweicht.

23. Vorrichtung nach Anspruch 21 oder 22,
**dadurch gekennzeichnet, daß** die zweite Meßvorrichtung zum Einstellen der ersten Meßvorrichtung verwendet werden kann.

## Revendications

1. Installation de traite d'animaux, tels que des vaches, ladite installation comportant des gobelets trayeurs (2) pouvant être connectés aux trayons d'un animal à traire, de sorte qu'un gobelet trayeur (2) soit connecté à un premier élément de réception de lait (4), à partir duquel le lait produit est guidé vers un réservoir de lait (6), ladite installation comportant au moins un élément de réception de lait supplémentaire (9) positionné entre le premier élément de réception de lait (4) et le réservoir de lait (6), une connexion parallèle existant entre les deux éléments de réception de lait (4, 9), et une des connexions étant constituée par une ligne de vide (11) **caractérisée par le fait que** quatre gobelets trayeurs (2) sont fournis, chacun étant connecté à un premier élément de réception de lait séparé (4A, 4B, 4C, 4D), tandis que chacun de ces premiers éléments de réception de lait est connecté au même second élément de réception de lait (9) par une liaison parallèle respective.

2. Installation de traite d'animaux, tels que des vaches, ladite installation comportant des groupes de gobelets trayeurs (2) chacun pouvant être connecté aux trayons d'un animal à traire, de sorte qu'un gobelet trayeur (2) soit connecté à un premier élément de réception de lait (4), à partir duquel le lait produit est guidé vers un réservoir de lait (6), ladite installation comportant au moins un élément de réception de lait supplémentaire (9) positionné entre le premier élément de réception de lait (4) et le réservoir de lait (6), **caractérisé en ce que** divers premiers éléments de réception de lait (4, 4') sont fournis, chacun étant connecté au second élément de réception de lait (9) par une liaison parellèle respective, tandis que le nombre de groupes de gobelets trayeurs est égal au nombre de premiers éléments de réception de lait (4, 4'), et chaque groupe de gobelets trayeurs est connecté à un premier élément de réception de lait séparé (4, 4').

3. Installation selon la revendication 1 ou 2, **caractérisée en ce que** l'installation comporte une vanne (10) positionnée dans la ligne de lait (7) entre les deux éléments de réception de lait (4, 9), dans le but que le lait récupéré dans le premier élément de réception de lait (4), obtenu à partir d'un animal qui est trait, s'écoule dans le second élément de réception de lait (9) après qu'une période de temps établie se soit écoulée.

4. Installation selon la revendication 1, 3 ou 4, **caractérisée en ce que** la vanne (10) peut libérer le lait à partir de la ligne de lait (7), après prélèvement d'un échantillon de lait à partir du lait présent dans le second élément de réception de lait (9).

5. Installation selon la revendication 1, 2, 3 ou 4, **caractérisée en ce que** la ligne de vide (11) comporte une vanne (12), par l'intermédiaire de laquelle, tandis que la ligne de vide (11) est fermée entre les deux éléments de réception de lait (4, 9), un milieu gazeux, tel que de l'air ou de l'azote, peut être admis dans le second élément de réception de lait (9) dans le but que le lait présent dans celui-ci soit évacué vers le réservoir de lait (6).

6. Installation selon l'une quelconque des revendications précédentes, **caractérisée en ce que** le second élément de réception de lait (9) est positionné au-dessus du réservoir de lait (6).

7. Installation selon l'une quelconque des revendications précédentes, **caractérisée en ce que** le second élément de réception de lait (9) est positionné au-dessus du réservoir de lait (6), et le milieu gazeux peut être admis dans le second élément de réception de lait (9) sous une pression inférieure à la pression atmosphérique.

8. Installation selon l'une quelconque des revendications précédentes, **caractérisée en ce que** le réservoir de lait (6) est disposé entièrement ou partiellement au-dessus du second élément de réception de lait (9), et **en ce que** le milieu gazeux peut être admis dans le second élément de réception de lait (9) sous une pression plus élevée que la pression atmosphérique.

9. Installation selon l'une quelconque des revendications précédentes, **caractérisée en ce que** le second élément de réception de lait (9) est conçu sous la forme d'un dispositif de prérefroidissement destiné à refroidir le lait et de tels liquides.

10. Installation selon l'une quelconque des revendications précédentes, **caractérisée en ce qu'**un réservoir secondaire (17) est inclus dans la connexion entre le second élément de réception de lait (9) et le réservoir de lait (6).

11. Installation selon la revendication 10, **caractérisée en ce que** l'installation comporte des moyens destinés à nettoyer le réservoir de lait (6), de sorte que pendant le nettoyage du réservoir de lait (6), le lait est récupéré dans le réservoir secondaire (17).

12. Installation selon la revendication 11, **caractérisée en ce qu'**une vanne (20) est agencée entre le réservoir secondaire (17) et le réservoir de lait (6), par l'intermédiaire de laquelle le lait présent dans le réservoir secondaire (17) peut être évacué vers le réservoir de lait (6) après que ce dernier ait été nettoyé.

13. Installation selon la revendication 12, **caractérisée en ce que** le réservoir secondaire (17) est inclus dans une connexion parallèle (18) entre l'élément de récupération et le réservoir de lait (6).

14. Installation selon la revendication 13, **caractérisée en ce qu** une vanne (19) est incluse dans la connexion entre l'élément de récupération et le réservoir de lait (6), par l'intermédiaire de laquelle le lait est évacué, directement ou via le réservoir secondaire (17), vers le réservoir de lait (6).

15. Installation selon la revendication 12, **caractérisée en ce que** le réservoir secondaire (17) comporte un espace extensible (23) dont le volume augmente lorsque, pendant l'envoi de lait, la vanne (20) située entre le réservoir secondaire (17) et le réservoir de lait (6) est fermée, et dont le volume diminue par la suite lorsque ladite vanne (20) est ouverte.

16. Installation selon l'une quelconque des revendications précédentes, **caractérisée en ce que** les vannes (10, 10', 10A, 10B, 10C, 10D, 12, 15, 19 et 20) sont commandées par ordinateur.

17. Installation selon l'une quelconque des revendications précédentes, **caractérisée en ce que** le réservoir de lait (6) comporte un système de refroidissement, de sorte que, après l'introduction d'une quantité minimum de lait dans le réservoir de lait (6) ou une période de temps minimum après l'envoi de lait vers le réservoir de lait vide (6), un refroidissement est effectué d'une manière pulsatoire pendant une période de temps établie, et après que cette période de temps se soit écoulée, il est effectué en continu.

18. Installation selon l'une quelconque des revendications précédentes, **caractérisée en ce que** des premiers moyens de mesure sont agencés pour déterminer la teneur en éléments spécifiques du lait obtenu à partir d'animaux individuels, telle que la teneur en matières grasses, la teneur en protéines, et la teneur en lactose.

19. Installation selon la revendication 18, **caractérisée en ce qu'**un ordinateur est fourni pour calculer, sur la base de la teneur en éléments spécifiques établie pour le lait d'animaux individuels, une valeur moyenne pour un nombre d'animaux.

20. Installation selon la revendication 19, **caractérisée en ce que** l'ordinateur enregistre le moment où la teneur en éléments spécifiques du lait d'animaux individuels dévie sur une étendue spécifique de la valeur moyenne calculée pour ceux-cl.

21. Installation selon la revendication 19 ou 20, **caractérisée en ce que** des seconds moyens de mesure sont fournis pour déterminer la teneur en éléments spécifiques du lait obtenu à partir de tous les animaux traits ensemble, telle que la teneur en matières grasses, la teneur en protéines ou la teneur en lactose.

22. Installation selon la revendication 21, **caractérisée en ce que** l'ordinateur enregistre le moment où la teneur en éléments spécifiques du lait, établie pour tous les animaux traits ensemble, dévie sur une étendue spécifique de la valeur moyenne calculée pour ceux-ci.

23. Installation selon la revendication 21 ou 22, **caractérisée en ce que** les seconds moyens de mesure peuvent être utilisés pour l'étalonnage des premiers moyens de mesure.
